# EUROPÄISCHE PATENTANMELDUNG

(11) **EP 1 258 313 A2**
(43) Veröffentlichungstag der Anmeldung: **20.11.2002**
(21) Anmeldenummer: 02010022.8
(22) Anmeldetag: 04.05.2002
(51) Int. Cl.: B23K 37/04

(54) **Spannvorrichtung**

(30) Priorität: 16.05.2001 DE 10124063
(71) Anmelder: DE- Sta- Co Metallerzeugnisse GmbH, 61440 Oberursel (DE)
(72) Erfinder: Ulle, Detlev, 61203 Reichelsweg (DE)
(74) Vertreter: Wolf, Günter, Dipl.-Ing.

(57) **Zusammenfassung**

Die Erfindung betrifft eine Spannvorrichtung zum gegenseitigen Festspannen insbesondere von per Laser zu verschweißenden Karosserieteilrändern, bestehend aus einem Kopfstück (1) mit relativ gegeneinander verschwenkbaren Spannarmen (2) und aus einem am Kopfstück (1) angeordneten Antriebsglied (3) mit Stellstange (4) zur Verstellung von mindestens einem der Spannarme (2) mittels einem Stellglied (5), das verdrehfest mit der Schwenkachse (6) des Spannarmes (2) verbunden ist. Nach der Erfindung ist vorgesehen, dass das mindestens eine Stellglied (5) mit einer in sich abgewinkelten Stellkurve (7) versehen ist, in die die Stellstange (4) mit ihrem freien Ende (8) kulissenartig eingreift, wobei die abgewinkelten Teile (9, 10) der Stellkurve (7) in Bezug auf die Stellstangenachse (4') unterschiedlich geneigt sind und dass am Antriebsglied (3) oder dem Kopfstück (1) ein in sich in zwei Freiheitsgraden, nämlich einem linearen und einem drehenden Freiheitsgrad, begrenzt bewegbarer Befestigungsadapter (11) fest aber lösbar angeordnet ist.

## Beschreibung

Die Erfindung betrifft eine Spannvorrichtung zum gegenseitigen Festspannen insbesondere von per Laser zu verschweißenden Karosserieteilrändern, bestehend aus einem Kopfstück mit relativ gegeneinander verschwenkbaren Spannarmen und aus einem am Kopfstück angeordneten Antriebsglied mit Stellstange zur Verstellung von mindestens einem der Spannarme mittels eines Stellgliedes, das verdrehfest mit der Schwenkachse des Spannarmes verbunden ist.

Spannvorrichtungen der genannten Art und für den genannten Zweck sind hinlänglich bekannt und in Benutzung, so daß es diesbezüglich an sich keines besonderen druckschriftlichen Nachweises bedarf. Die Definition "relativ gegeneinander verschwenkbare Spannarme" ist dabei so zu verstehen, daß einer der Spannarme stationär dem anderen schwenkbaren Spannarm als Widerlager zugeordnet sein kann (siehe bspw. DE-A-36 13 852) oder daß beide Spannarme gegeneinander bis zum Erreichen ihrer Schließ- bzw. Spannstellung zangen- bzw. scherenartig schwenkbar an der Vorrichtung gelagert sind.

Zwecks Anwendung des Laserschweißens befinden sich Fertigungsmethoden für das Verschweißen der Karosserieteile in der Entwicklung, wobei festgestellt wurde, daß die bisher dafür verwendeten, sogenannten Kniehebelspannvorrichtungen (siehe bspw. DE-U-83 07 606) weniger geeignet sind, da diese ihre volle Spannkraft praktisch nur am Ende ihres Schließvorganges über einen sehr kurzen Weg leisten.
Hinzu kommt noch, daß sich beim Laserschweißen die zu verbindenden Karosserieteile in einem sogenannten Geometriegestell in bereits weitestgehend genauer Zuordnung befinden, auf welche Zuordnung die notwendigen Spannvorrichtungen orientierbar sein müssen, was sich ebenfalls nicht ohne weiteres mit den bisherigen, dafür verwendeten Spannvorrichtungen bewerkstelligen läßt.

Der Erfindung liegt demgemäß die Aufgabe zugrunde, eine für diese neu entwickelte bzw. in Betracht gezogene Fertigungsmethode bzgl. des Laserschweißens von vorgeformten Blechteilen, d.h., hier insbesondere von Karosserieteilen, eine dafür besser als Kniehebelspanner geeignete Spannvorrichtung zu schaffen, die zum Einen in der Lage ist, über einen längeren Weg hohe Spannkräfte aufzubringen, und zum Anderen aber auch, sich bis zu einem gewissen Grade auf die per Geometriegestell vorgegebene, schon weitestgehend genaue Positionierung der zu verbinden Blechteile selbsttätig einstellen zu können.

Diese Aufgabe ist mit einer Spannvorrichtung der eingangs genannten Art nach der Erfindung dadurch gelöst, daß das mindestens eine Stellglied mit einer in sich abgewinkelten Stellkurve versehen ist, in die die Stellstange mit ihrem freien Ende kulissenartig eingreift, wobei die abgewinkelten Teile der Stellkurve in Bezug auf die Stellstangenachse unterschiedlich geneigt sind, und daß am Antriebsglied oder dem Kopfstück ein in sich in zwei Freiheitsgraden, nämlich einem linearen und einem drehenden Freiheitsgrad, begrenzt bewegbarer Befestigungsadapter fest aber lösbar angeordnet ist.

Diese Gesamtkombination erfüllt also zwei für das Laserschweißen in einem sogenannten Geometriegestell genau vorpositionierten Blechen notwendige Forderungen, nämlich bei an sich fixer Anordnung der Spannvorrichtung eine begrenzt selbsttätige Positionseinstellung der Spannvorrichtung auf den zu verspannenden Blechrandbereich und hohe Kraftaufbringung über einen längeren Stellweg der Spannarme, wenn sich diese an den betreffenden Blechbereich bereits angelegt haben, wobei darauf hinzuweisen ist, daß im Gegensatz zur bisherigen Positionierungsart der Bleche, diese bei Anordnung in einem Geometriegestell noch eine gewisse Distanz zueinander haben. Mit Rücksicht darauf ist vorteilhaft in Weiterbildung vorgesehen, daß die abgewinkelten Teile auch unterschiedlich längenbemessen sind, wobei das längere und weniger geneigte Teil den Schließstellungsteil bildet.

Kurvenführungen, um vorgegebene Stellwege zu bewirken, sind zwar bekannt, und zwar auch an Spannvorrichtungen; soweit bekannt, sind aber solche Kurvenführungen nicht darauf abgestellt bzw. ausgelegt, um die hier vorliegende spezielle Aufgabe zu bewältigen.

Eine ebenfalls als vorteilhaft anzusehende Weiterbildung hinsichtlich der Funktionssicherheit solcher über Kurvenführungen betätigbarer Spannarme besteht erfindungsgemäß darin, daß die aus dem mindestens einen Stellglied und der Stellstange gebildete Stellmechanik für die Schwenkachse des mindestens einen schwenkbaren Spannarmes im als schließbare Kapsel ausgebildeten Kopfstück angeordnet ist, wobei auf dem seitlich aus dem Kopfstück herausragenden Ende der Schwenkachse der Spannarm sitzt. Dadurch wird sichergestellt, daß die Kurvenführung/en unbeeinträchtigt bleiben und keine der in vergleichsweise grösserer Anzahl als bisher längs einer zu verschweißenden Blechrandstrecke anzusetzenden, erfindungsgemäßen Spannvorrichtungen ausfällt und ihre Spannfunktion nicht erfüllen kann.

Die erfindungsgemäße Spannvorrichtung und zusätzliche vorteilhafte Weiterbildungen werden nachfolgend anhand der zeichnerischen Darstellung von Ausführungsbeispielen näher erläutert, wobei die dargestellten Ausführungsbeispiele durchgehend Bezug nehmen auf solche, bei denen das Kopfstück mit zwei beweglichen Spannarmen bestückt ist, die Schließ- bzw. Spannkraft in Endstellung mit Rückhub der Stellstange bewirkt wird und das Kopfstück als die Stellmechanik umschließendes Element ausgebildet ist.

Es zeigt
- Fig. 1: perspektivisch und in Ansicht von unten die Spannvorrichtung;
- Fig. 2: die Spannvorrichtung in Seitenansicht;
- Fig. 3: in Draufsicht eine Ausführungsform des Befestigungsadapters;
- Fig. 4: die Spannvorrichtung mit geöffnetem Kopfstück in Schließ- bzw. Spannstellung und
- Fig. 5: die Spannvorrichtung gemäß Fig. 4 in Öffnungsstellung.

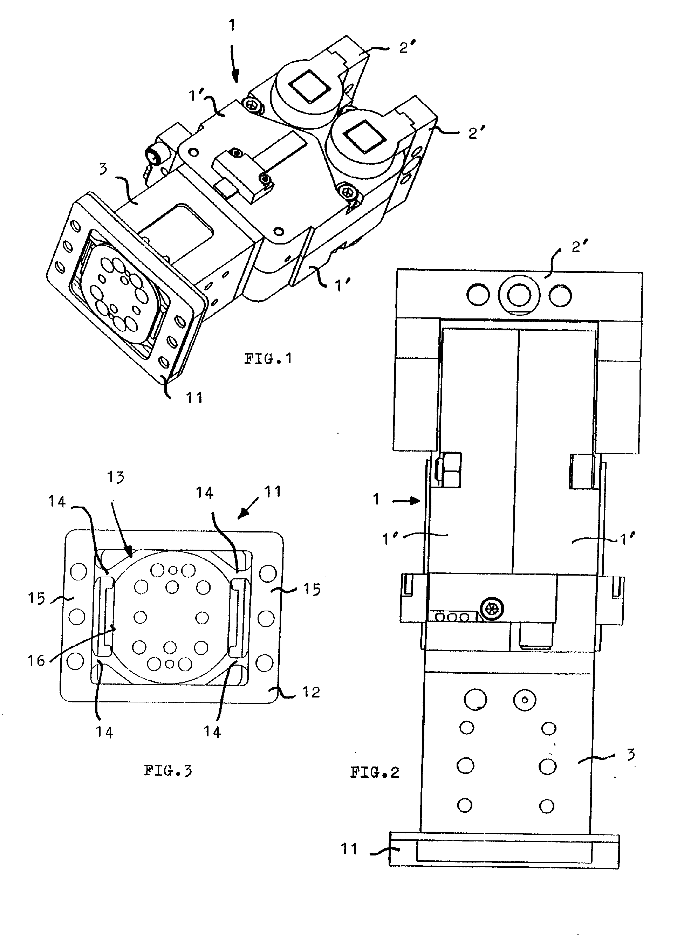

Die Spannvorrichtung besteht gemäß dem in den Fig. 1 bis 5 dargestellten Ausführungsbeispiel aus einem Kopfstück 1 mit zwei gegeneinander verschwenkbaren Spannarmen 2 und aus einem am Kopfstück 1 angeordneten Antriebsglied 3 (bspw. Pneumatikzylinder) mit Stellstange 4 zur Verstellung der beiden Spannarme 2 mittels je einem Stellglied 5, welche Stellglieder 5 verdrehfest mit der Schwenkachse 6 des jeweiligen Spannarmes 2 verbunden sind.

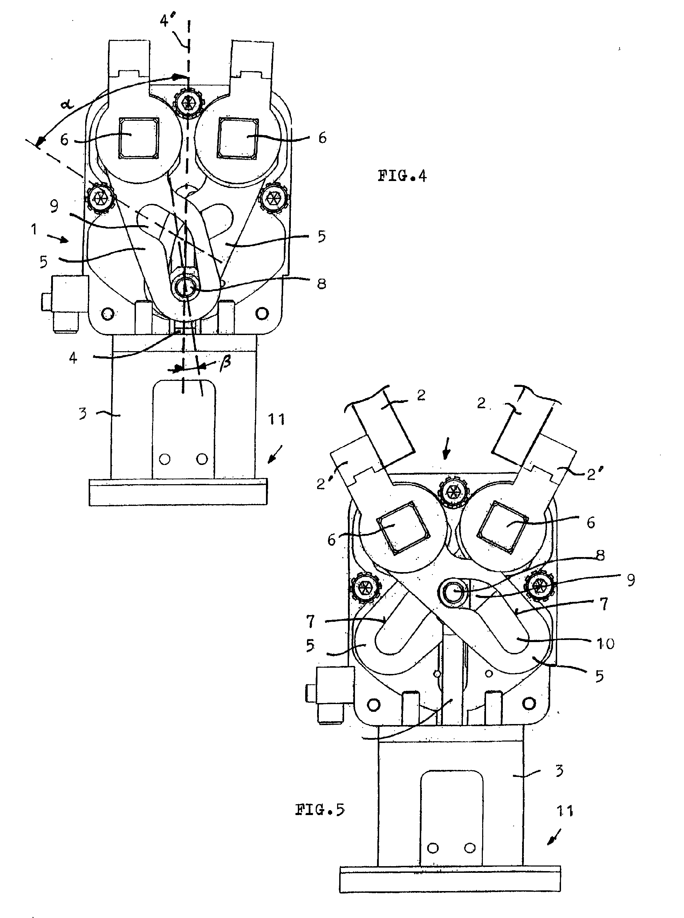

Für eine derartige Spannvorrichtung ist nun unter Verweis auf das Ausführungsbeispiel gemäß der Fig. 4, 5 wesentlich, daß jedes der beiden Stellglieder 5 mit einer in sich, wie dargestellt, abgewinkelten Stellkurve 7 versehen ist, in die die Stellstange 4 mit ihrem freien Ende 8 kulissenartig eingreift, wobei die abgewinkelten Teile 9, 10 der beiden sich spiegelbildlich entsprechenden Stellkurven 7 in Bezug auf die Stellstangenachse 4' unterschiedlich geneigt sind und daß am Antriebsglied 3 oder dem Kopfstück 1 ein in sich in zwei Freiheitsgraden, nämlich einem linearen und einem drehenden Freiheitsgrad, begrenzt bewegbarer Befestigungsadapter 11 fest aber lösbar angeordnet ist.

Diesbezüglich und ebenfalls unter Verweis auf die Fig. 4, 5 ist der in Bezug auf den anderen abgewinkelten Teil 10 der jeweiligen Stellkurve 7 kürzere Teil 9 der Stellkurven in Bezug auf die Stellstangenachse 4' in Schließstellung (siehe Fig. 4) um einen Winkel α in der Grössenordnung von 55-65° und der vorteilhaft längere Teil 10 um einen Winkel β in der Größenordnung von 5-15° geneigt.

Was den begrenzt bewegbaren Befestigungsadapter 11 betrifft, so ist, dieser in bevorzugter Ausführungsform, wie in Fig. 3 verdeutlicht, aus einem formstabilen Rahmen 12 und aus einer in diesem zentrisch angeordneten formstabilen, im wesentlichen kreisförmigen Vorrichtungsanschlußplatte 13 gebildet. Diese Anschlußplatte 13 ist zwischen beidseitig in Richtung der Spannarme 2 orientierten, elastischen und mit dem Rahmen 12 teilweise in Verbindung stehenden Strängen 14 gefaßt und quer zu den Strängen 14 mit abgepolsterten, sich parallel zu benachbarten Rahmenteilen 15 erstreckenden, geraden Rändern 16 versehen. Die Stränge 14 ermöglichen beim "Zugreifen" der Vorrichtung an zusammenzudrückenden Blechrändern eine begrenzt lineare und auch drehende Einstell- bzw. Ausrichtbarkeit, wobei das evtl. Drehen seine Begrenzung durch Anschlag der geraden Ränder 16 an den benachbarten Rahmenteilen 15 findet. Der Rahmen 12 ist dabei also das eigentliche Befestigungselement für die Gesamtvorrichtung an einem hier nicht dargestellten Geometriegestell. Dieser sich selbsttätig einstellende "Zugriff" der Spannvorrichtung zu den zu verschweißenden Blechrändern bzw. Blechrandbereichen ist insofern für die neuartige Fertigungstechnik wichtig, als damit ein verkanteter Angriff der Spannarme an den Rändern ausgeschlossen ist.

Aus dem einleitend erwähntem Grund der Funktionssicherheit ist die aus den beiden Stellgliedern 5 und der Stellstange 4 gebildete Stellmechanik für die Schwenkachsen 6 der schwenkbaren Spannarme 2, die an bügelartigen Befestigungselemente 2' befestigt sind, im als schließbare Kapsel ausgebildeten Kopfstück 1 angeordnet, wobei auf dem seitlich aus dem Kopfstück 1 herausragenden Enden der Schwenkachsen 6 die Befestigungselemente 2' für die eigentlichen Spannarm 2 sitzen. Hierzu wird auf die Fig. 1, 2 verwiesen, die das aus zwei entsprechend identischen Schalen 1' zusammenfügbare Kopfstück 1 zeigen.

Die dargestellte Stellmechanik, mit der die Spannarme 2 durch Einzug der Stellstange 4 in Schließstellung gebracht werden, d.h., die Stellglieder 5 mit ihren Stellkurven 7 und das Ende 8 der Stellstange 4 sind derart einander zugeordnet, daß beim Niederziehen der Stellstange 4 die Spannarme 2 in Spannstellung gebracht werden, wird deshalb bevorzugt, weil dadurch im Vergleich zu einer umgekehrten Zuordnung das Kopfstück weniger Raum beansprucht, woran bei derartigen Spannvorrichtungen in der Regel immer ein Interesse besteht.

## Patentansprüche

1. Spannvorrichtung zum gegenseitigen Festspannen insbesondere von per Laser zu verschweißenden Karosserieteilrändern, bestehend aus einem Kopfstück (1) mit relativ gegeneinander verschwenkbaren Spannarmen (2) und aus einem am Kopfstück (1) angeordneten Antriebsglied (3) mit Stellstange (4) zur Verstellung von mindestens einem der Spannarme (2) mittels einem Stellglied (5), das verdrehfest mit der Schwenkachse (6) des Spannarmes (2) verbunden ist,
**dadurch gekennzeichnet,**
**daß** das mindestens eine Stellglied (5) mit einer in sich abgewinkelten Stellkurve (7) versehen ist, in die die Stellstange (4) mit ihrem freien Ende (8) kulissenartig eingreift, wobei die abgewinkelten Teile (9, 10) der Stellkurve (7) in Bezug auf die Stellstangenachse (4') unterschiedlich geneigt sind, und daß am Antriebsglied (3) oder dem Kopfstück (1) ein in sich in zwei Freiheitsgraden, nämlich einem linearen und einem drehenden Freiheitsgrad, begrenzt bewegbarer Befestigungsadapter (11) fest aber lösbar angeordnet ist.

2. Spannvorrichtung nach Anspruch 1,
**dadurch gekennzeichnet,**
**daß** die abgewinkelten Teile (9,10) unterschiedlich längenbemessen sind, wobei das längere und weniger geneigte Teil (10) den Schließstellungsteil bildet.

3. Spannvorrichtung nach Anspruch 1 oder 2,
**dadurch gekennzeichnet,**
**daß** die aus dem mindestens einen Stellglied (5) und der Stellstange (4) gebildete Stellmechanik für die Schwenkachse (6) des mindestens einen schwenkbaren Spannarmes (2) im als schließbare Kapsel ausgebildeten Kopfstück (1) angeordnet ist, wobei auf dem seitlich aus dem Kopfstück (1) herausragenden Ende der Schwenkachse (6) der Spannarm (2) sitzt.

4. Spannvorrichtung nach einem der Ansprüche 1 bis 3,
**dadurch gekennzeichnet,**
**daß** das Stellglied (5) mit seiner Stellkurve (7) und das Ende (8) der Stellstange (4) derart einander zugeordnet sind, daß beim Niederziehen der Stellstange (4) der Spannarm (2) in Spannstellung bringbar ist.

5. Spannvorrichtung nach Anspruch 4,
**dadurch gekennzeichnet,**
**daß** der in Bezug auf den anderen abgewinkelten Teil (10) der Stellkurve (7) kürzere Teil (9) der Stellkurve in Bezug auf die Stellstangenachse (4') in Schließstellung um einen Winkel α von 55-65° und der längere Teil (10) um einen Winkel β von 5 -15° geneigt ist.

6. Spannvorrichtung nach einem der Ansprüche 1 bis 5,
**dadurch gekennzeichnet,**
**daß** der Befestigungsadapter (11) aus einem formstabilen Rahmen (12) und aus einer in diesem zentrisch angeordneten formstabilen, im wesentlichen kreisförmigen Vorrichtungsanschlußplatte (13) gebildet ist, wobei die Platte (13) zwischen beidseitig in Richtung der Spannarme (2) orientierten, elastischen und mit dem Rahmen (12) teilweise in Verbindung stehenden Strängen (14) gefaßt und die Platte (13) quer zu den Strängen (14) mit abgepolsterten, sich parallel zu benachbarten Rahmenteilen (15) erstreckenden, geraden Rändern (16) versehen ist.
